# EUROPEAN PATENT APPLICATION

(11) **EP 1 052 790 A1**
(43) Date of publication of application: **15.11.2000**
(21) Application number: 99303772.0
(22) Date of filing: 14.05.1999
(51) Int. Cl.: H04B 7/185

(54) **Interference cancellation in an aircraft in communication with a satellite**

(71) Applicant: ICO Services Ltd., London W6 9BN (GB)
(72) Inventor: Wyrwas, Richard, London N14 6LN (GB)
(74) Representative: Read, Matthew Charles

(57) **Abstract**

An interference monitoring antenna (16) is mounted to an aircraft and used to obtain a description of interference which is likely to affect transmissions from the communications antenna (14) of an aeronautical terminal (AT) on the aircraft via a satellite telecommunications system. Uplink interference cancellation for transmissions from the communications antenna is performed by pre-compensating the transmissions or by transmitting a description of the measured interference to a ground station.

## Description

This invention relates to interference cancellation in a satellite telecommunications system, particularly but not exclusively to uplink interference cancellation for aeronautical satellite communications.

Terrestrial mobile telecommunications systems are well known and a number of different systems have developed which operate according to different standards, both analog and digital. In Europe and the Far East, excluding Japan, and elsewhere, the digital Global System Mobile (GSM) network has become popular, whereas in the USA, networks which operate according to the IS-41 recommendations such as the Advanced Mobile Phone System (AMPS) and the Digital Advanced Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Mobile telecommunication systems have been proposed that use satellite communication links between mobile communications terminals and conventional terrestrial networks such as public switched telephone networks (PSTNs) and public land mobile networks (PLMNs). One network known as the IRIDIUM™ satellite cellular system is described in EP-A-0365885 and US Patent No. 5 394 561 (Motorola), which makes use of a constellation of so-called low earth orbit (LEO) satellites, that have an orbital height of 780 km. Mobile terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed, with an orbital height in the range of 10-20,000 km. Reference is directed to the ICO™ satellite cellular system described for example in GB-A-2 295 296. With this system, the satellite communications link does not permit communication between adjacent satellites. Instead, a signal from a mobile terminal such as a mobile handset is directed firstly to the satellite and then directed to a ground station or satellite access node (SAN), connected to conventional land-based telephone networks. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communication networks, ground stations are located at different sites around the world in order to communicate with the orbiting satellites. These in turn can communicate with a wide variety of mobile terminals, including not only mobile telephone handsets, but also terminals to be mounted in terrestrial vehicles, on marine vessels and in aircraft.

Transmissions from a ground station to a mobile terminal via a satellite are referred to as being transmitted on a downlink, whereas transmissions from the mobile terminal to the ground station are referred to as being transmitted on an uplink. The majority of satellite systems including the ICO™ system are designed to operate in a frequency range known as the S-band. For example, the communications uplink and downlink for the ICO™ system operate over a 30 MHz frequency band between 1980 - 2010 MHz Earth-to-Space and 2170 - 2200 MHz Space-to-Earth. At these frequencies, the satellite sees considerable interference from other communication services, for example television signals and microwave communications links for fixed terrestrial services. In the case of interference sources with highly structured signal properties, for example, a relatively powerful television transmitter, interference cancellation can be carried out by conventional methods. For example, the interference signal can be modelled and digital signal processing applied to reduce its effects significantly. However, such techniques do not work with interference having weakly structured signal properties which result from a superposition of many interfering signals, which may individually be of a relatively low power. Such composite interference signals can nevertheless be significant enough to prevent a satellite communications channel being established on the uplink.

The aim of the invention is to address this problem in aeronautical applications.

According to the invention, there is provided a method of interference cancellation in a satellite telecommunications system in which an aeronautical terminal on an aircraft is in communication with a satellite, characterised by receiving an interference signal at the aircraft and using said interference signal to cancel interference affecting communication signals transmitted between the aeronautical terminal and the satellite.

The method allows cancellation of interference from sources having weakly structured signal properties, for which conventional interference techniques may be unsuitable.

The interference signal can be received at an interference monitoring antenna mounted to the aircraft.

The method may comprise using the interference signal to pre-compensate communication signals transmitted from the aeronautical terminal. Alternatively or in addition, the method may include transmitting a description of the interference signal to a ground station, to allow interference cancellation to be performed at the ground station.

The method may further comprise selecting a channel on the satellite which is substantially free of interference for transmission of the description of the interference signal.

According to the invention, there is further provided an aeronautical terminal for performing interference cancellation in a satellite telecommunications system, comprising a communications antenna for communicating via a satellite, characterised by an interference monitoring antenna for receiving an interference signal to be used for cancelling interference affecting the communications signal transmitted between the aeronautical terminal and the satellite.

To enable substantial isolation of the interference monitoring antenna from the communications antenna, the communications antenna is mounted to the top of the fuselage of an aircraft, while the interference monitoring antenna is mounted to the bottom of the fuselage.

There is also provided, in accordance with the invention, a ground station in a satellite telecommunications system for performing interference cancellation on a transmission between a first antenna of an aeronautical terminal and a satellite, comprising means for receiving a description of interference measured at a second antenna of the aeronautical terminal and means arranged to cancel interference affecting the transmission using said description.

The invention further provides a method of interference cancellation at a ground station in a satellite telecommunications system, comprising receiving a transmission from an aeronautical terminal via a satellite, receiving a description of interference measured at the aeronautical terminal and using said description to cancel interference affecting the transmission.

Embodiments of the invention will now be described by way of example with reference to the accompanying drawings, in which:
Figure 1 is a schematic diagram of a satellite telecommunications system in accordance with the invention;
Figure 2 is a schematic diagram of the spot beam pattern produced by one of the satellites on the earth;
Figure 3 is a schematic diagram of communication and interference paths within a single spot beam produced by a satellite;
Figure 4 is a schematic block diagram of the circuits of an aeronautical terminal to be mounted on an aircraft;
Figure 5 is a flow diagram illustrating the process of interference cancellation by signal pre-compensation; and
Figure 6 is a flow diagram illustrating an alternative method of interference cancellation.

### Overview of network

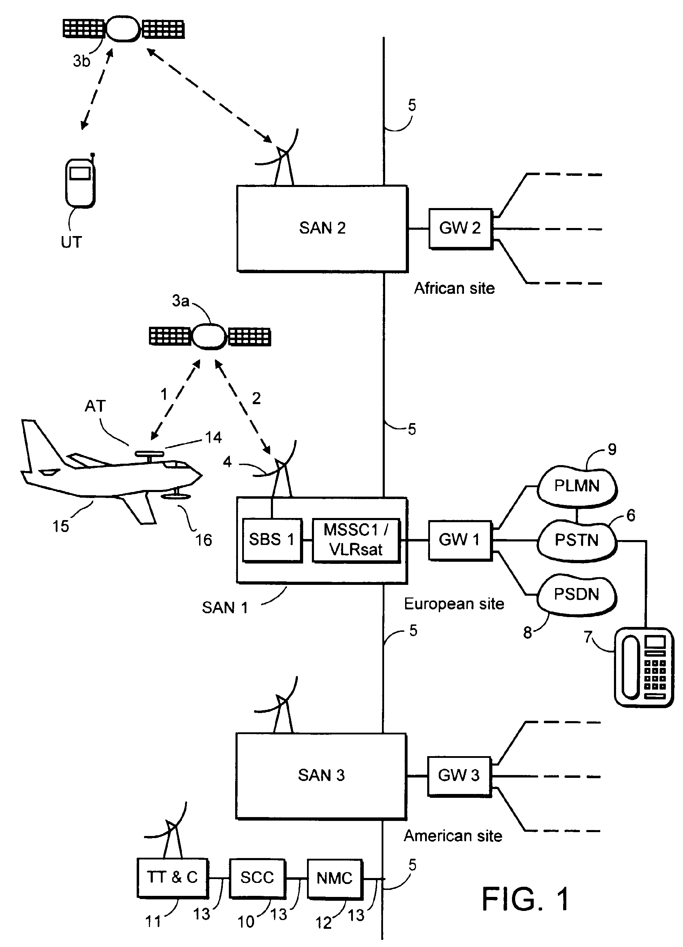

Referring to Figure 1, a schematic block diagram of a satellite mobile telecommunications network is shown corresponding to the ICO™ network. A mobile communications terminal in the form of an aircraft - mounted terminal, referred to herein as an aeronautical terminal AT can communicate on a radio channel over a communication path 1, 2 via an earth orbiting satellite 3a with a land-based satellite access node SAN 1. As shown schematically in Figure 1, SAN 1 is provided with a dish antenna arrangement that includes antenna 4 which can track the orbiting satellite 3a.

A number of the satellite access nodes SAN 1, 2, 3, etc are connected together to form a backbone network 5, which is connected through a number of gateways GW 1, 2, 3, etc to conventional land-based telephone networks. For example, the gateway GW 1 is connected to a land-based public switched telephone network 6 (PSTN), which permits connection to be made to a conventional telephone set 7. The gateway GW1 is additionally connected to a public switched data network 8 (PSDN) and a public land mobile network 9 (PLMN). Each of the gateways GW 1, 2, 3 may comprise existing International Switching Centres (ISCs) or mobile switching centres (MSCs) of the type used in GSM mobile networks.

The satellite network is designed to provide world-wide coverage and the satellite 3a forms part of a constellation of satellites, which may be arranged in several orbits. The satellites may be arranged in a MEO constellation, for example with an orbital height of 10,390 km, although the invention is not restricted to a particular orbital height. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing more than one concurrent or diverse communication path to the user terminal from a particular SAN. Additional satellites may be included in the constellation in order to provide redundancy and further diversity.

In this embodiment, two satellites 3a, 3b of the constellation are shown in a common orbit and the satellites are tracked by the antenna arrangement 4 of each SAN. The antenna arrangement 4 for each SAN may for example include five dish antennas to track satellites individually, although only one dish is shown for the SANs, in order to simplify the drawing.

The SANs are spaced around the earth in order to provide continuous coverage. In the example shown, SAN 1 may be located in Europe whereas SAN 2 may be located in Africa, SAN 3 in America and other SANs may be located elsewhere.

SAN 1 consists of a satellite base station SBS 1 which is coupled to the dish antenna arrangement 4 for tracking the satellites, the SBS 1 including transmitter and receiver circuits with amplifiers, multiplexers, de-multiplexer and codecs, together with signal processors. A mobile satellite switching centre MSSC 1 is coupled to SBS 1 and includes a satellite visitor location register VLR_{SAT} 1. MSSC 1 couples communication signals to the backbone network 5 and to the SBS 1, so as to allow individual telephone calls to be established through the backbone network 5 and the duplex communication link 1, 2 via the satellite 3a, to the aeronautical terminal AT 1. Also, MSSC 1 is connected to the gateway GW 1 so as to provide a connection to the land based networks 6, 8 and 9. It will be understood that all the SANs are of similar construction with a respective VLR_{SAT} to maintain a record of the subscribers registered.

In Figure 1, the SAN 2 is shown communicating with a mobile user terminal UT, in the form of a telephone handset, via satellite 3b. For further details of the network, reference is directed to GB-A- 2 295 296 and EP-A-0 869 628.

The satellites 3a, 3b are in non geo-stationary orbits and comprise generally conventional hardware such as the Hughes HS 601. They may include features disclosed in GB-A-2 288 913.

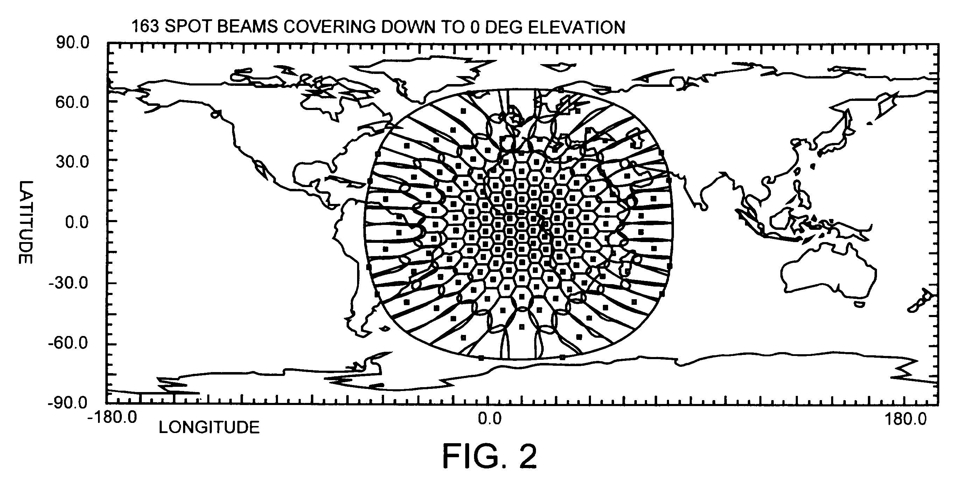

Each satellite 3a, 3b is arranged to generate an array of radio beams each with a footprint on the earth beneath the satellite, each beam including a number of different frequency channels and time slots as described in GB-A-2 293 725. The beams thus provide adjacent cellular areas which correspond to the cells of a conventional land-based mobile telephone network. In this example, each satellite produces a footprint of 163 spot beams on the earth in a fixed pattern as shown in Figure 2, which sweeps over the earth's surface as the satellite moves in its orbit.

The satellites are controlled by means of a satellite control centre 10 (SCC) and a telemetry tracking and control station 11 (TT&C), which are connected to a network management centre 12 (NMC) through a digital network 13 that is coupled to the backbone network 5. The SCC 10 and the TT&C 11 control operations of the satellites 3a, 3b, e.g. for setting the general transmission power levels and transponder input tuning, as directed by the NMC 12.

During a call, the aeronautical terminal AT communicates with a respective SAN, for example SAN 1, via the satellites. A full duplex communication path is provided between the AT and the SAN. As mentioned above, the communication link from the SAN to the AT via the satellite is referred to as the downlink, and the communication link from the AT via the satellite to the SAN is referred to as the uplink. Signals may travel over diverse paths between the AT and SAN 1 via satellite 3a or 3b or both of them concurrently.

### Aeronautical Terminal

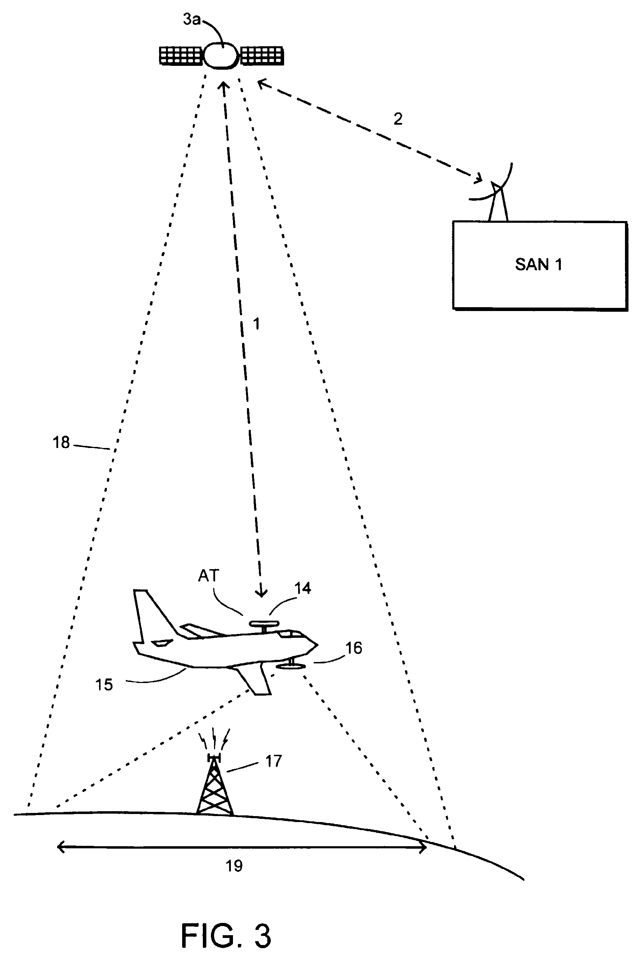

Referring to Figure 3, the aeronautical terminal AT includes a communications antenna 14, for example a phased array antenna, which is typically placed at the top of the aircraft fuselage 15. The AT communicates with SAN 1 over the communication path 1, 2 via satellite 3a using the communications antenna 14.

In accordance with the invention, a second, interference monitoring, antenna 16 is located on the aircraft in a position where it can measure the uplink interference directly, for example on the underside of the fuselage 15. Since the uplink communications signal emanates from the top of the fuselage 15 and radiates upwards, this signal can be isolated from the second antenna 16 so that the second antenna sees only interference, for example from a generic interference source 17 which represents a superposition of a plurality of interference sources. The interference monitoring antenna 16 may also see a very small amount of signal leakage from the communications antenna 14. The interference monitoring antenna 16 can be a phased array or, for example, a wideband antenna for picking up wideband interference. In this latter case, filtering is applied to extract interference at the frequencies of interest.

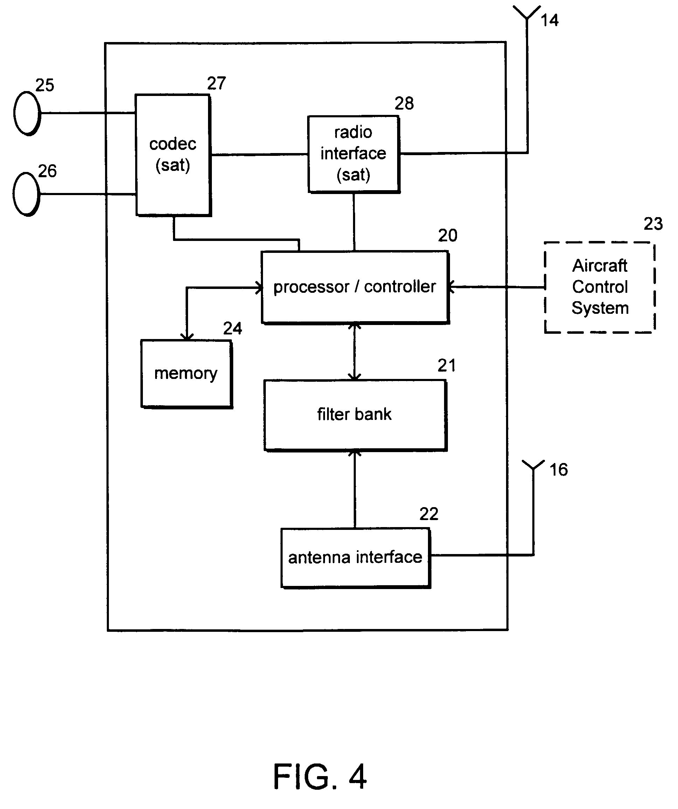

Referring to Figure 4, the AT comprises a processor 20, a filter bank 21 for selecting the frequencies of interest, such as the communications frequency, from the interference signal received by the wideband antenna 16, which is coupled to the filter bank 21 by conventional radio interface circuitry 22. Processor 20 receives information from the aircraft control system 23 regarding the altitude and position of the aircraft. It also receives information from a memory 24 which stores orbit data defining the satellite position.

The AT further includes inputs 25, 26 from a microphone and speaker coupled to a codec 27, which is in turn coupled to a conventional radio interface 28 connected to the communications antenna 14, so as to transmit and receive communication signals, in a manner well known per se.

The correspondence between the interference seen by the satellite 3a and that seen by the interference monitoring antenna 16 on the aircraft will depend on a variety of factors including the altitude and orbital movement of the satellite, the spread of the satellite spot beam 18, the directivity and corresponding beamwidth 19 of the antenna 16 and the altitude of the aircraft. However, for reasonable aircraft altitudes, for example, above 5km, the interference monitoring antenna 16 will provide a description of a significant part of the spot beam interference seen at the satellite 3a, which can be used for at least a first stage of interference cancellation.

As a result of the substantial difference between the satellite and aircraft altitudes, the phase and amplitude relationships of interference signal components will not be identical at the satellite and the aircraft. Therefore, only approximate interference cancellation can be achieved by simply subtracting the measured interference signal from the communication signal radiated from the communications antenna 14, even if the spot beam spread and interference monitoring antenna beamwidth 19 coincide exactly. However, further processing can be applied to the measured interference signal to approximate the characteristics of the interference signal at the satellite, using known information as to the system geometry and dynamics, including aircraft and satellite orbit, altitude and so on, as described above.

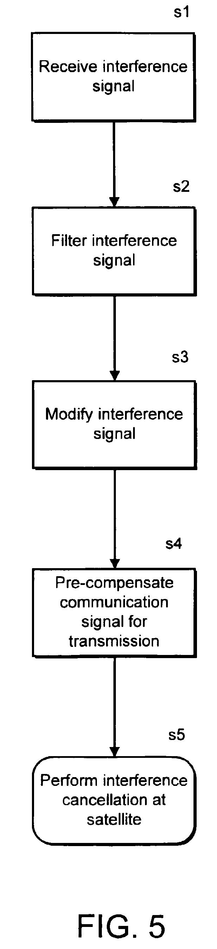

For example, referring to Figure 5, the interference signal picked up by the interference monitoring antenna 16 can however be used to pre-compensate transmissions by the AT from the communications antenna 14. The interference signal is detected at step s1, and filtered at step s2 under the control of processor 20 by filter bank 21 to extract the interference signal Iₐᵢᵣ at the frequency of interest. At step s3, the processor 20 uses the satellite position and orbit information from the memory 24 and aircraft position and altitude information from the aircraft control system 23 to modify the interference signal Iₐᵢᵣ to produce a modified signal component I_{comp}, which is arranged such that after propagation to the satellite 3a, I_{comp} has approximately the same amplitude, but opposite phase to Iₛₐₜ, ie. I_{comp} approximates to -Iₛₐₜ, where Iₛₐₜ represents the interference signal received directly by the satellite 3a from the interference source 17. At step s4, the modified interference signal I_{comp} is applied to the desired communication signal C by the processor 20 in real time to produce C + I_{comp}, thereby pre-compensating the transmission from the communications antenna 14. By the time the compensated communications signal C + I_{comp} reaches the satellite 3a, the interference compensation component I_{comp} of that signal will approximate to -Iₛₐₜ, such that it is in phase opposition with the interference signal I_{sat,} so that C + I_{comp} = C - Iₛₐₜ.

Therefore, at step s5, interference cancellation occurs at the satellite since the combination at the satellite antenna of the pre-compensated communication signal C - Iₛₐₜ with the interference signal Iₛₐₜ results in recovery of the communication signal C. Further interference cancellation can then be applied to the recovered signal C at the SBS 1 using conventional interference cancellation techniques.

As a further refinement, in addition to, or as an alternative to using orbit data, the co-ordinates of the spot beam can be used at the AT to calculate the overlap between the coverage of the spot beam and the interference monitoring antenna.

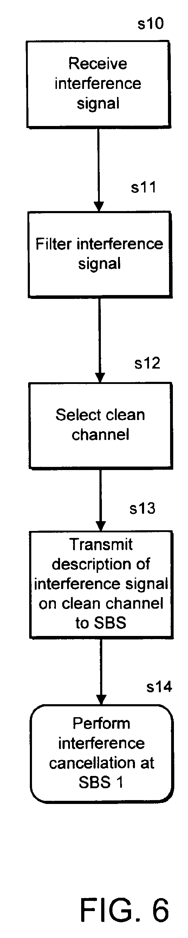

Referring to Figure 6, in an alternative example, the communication signal C is not pre-compensated at the aircraft. As for the first example above, the interference signal is detected at step s10, and filtered at step s11 under the control of processor 20 by filter bank 21 to extract the interference signal Iₐᵢᵣ at the frequency of interest. At step s12, a transmission channel is selected at a frequency which is relatively free from interference and at step s13, a representation of the interference signal is sent via this clear channel, through the satellite 3a to the ground station SAN 1. This representation could be, for example, a sampled interference signal, compressed by a compression algorithm, or a parametric representation describing the main fundamental and harmonic frequency components. The interference signal can alternatively be transmitted via a different satellite 3b. At step s14, SAN 1 performs the required cancellation when it receives the communications signal sent from the AT in a similar way to that explained in relation to example 1 above. While the invention has been described in terms of antennas mounted to the top and bottom of the fuselage of an aircraft, it will be understood that the positioning of the antennas is not important as long as they are substantially isolated so that the interference monitoring antenna 16 does not pick up significant amounts of the desired communications signal.

The communications and interference monitoring antennas could be integrated into a single physical antenna if isolation is achieved in the feed network or if a measure of the interference signal just prior to a communications burst can be used as a static description for the whole burst transmission.

## Claims

1. A method of interference cancellation in a satellite telecommunications system in which an aeronautical terminal (AT) on an aircraft is in communication with a satellite (3a), **characterised by** receiving an interference signal at the aircraft and using said interference signal to cancel interference affecting communication signals transmitted between the aeronautical terminal and the satellite.

2. A method according to claim 1, comprising receiving the interference signal at an interference monitoring antenna (16) mounted to the aircraft.

3. A method according to claim 1 or 2, comprising using the interference signal to pre-compensate communication signals transmitted from the aeronautical terminal.

4. A method according to any one of claims 1 to 3, comprising estimating the interference signal at the satellite (Iₛₐₜ) in dependence on the interference signal received at the aircraft (Iₐᵢᵣ).

5. A method according to any one of the preceding claims, comprising transmitting a description of the interference signal to a ground station (SAN 1), to allow interference cancellation to be performed at the ground station.

6. A method according to claim 5, comprising selecting a channel on the satellite (3a) for transmission of the description of the interference signal.

7. A method according to any one of the preceding claims, wherein the aeronautical terminal (AT) communicates with the satellite (3a) via a communications antenna (14).

8. An aeronautical terminal (AT) for performing interference cancellation in a satellite telecommunications system, comprising a communications antenna (14) for communicating via a satellite (3a), **characterised by** an interference monitoring antenna (16) for receiving an interference signal to be used for cancelling interference affecting the communications signal transmitted between the aeronautical terminal and the satellite.

9. An aeronautical terminal according to claim 8, wherein the communications antenna is mounted to the top of the fuselage (15) of an aircraft.

10. An aeronautical terminal according to claim 8 or 9, wherein the interference monitoring antenna is mounted to the bottom of the fuselage (15) of an aircraft.

11. An aeronautical terminal according to any one of claims 8 to 10, wherein the communications antenna (14) and the interference monitoring antenna (16) are substantially isolated from one another.

12. A ground station in a satellite telecommunications system for performing interference cancellation on a transmission between a first antenna (14) of an aeronautical terminal (AT) and a satellite (3a), comprising means for receiving a description of interference measured at a second antenna (16) of the aeronautical terminal and means arranged to cancel interference affecting the transmission using said description.

13. A method of interference cancellation at a ground station in a satellite telecommunications system, comprising receiving a transmission from an aeronautical terminal (AT) via a satellite (3a), receiving a description of interference measured at the aeronautical terminal and using said description to cancel interference affecting the transmission.

14. A method according to claim 13, comprising receiving the description of measured interference on a frequency which is different from the frequency on which the transmission is received.

15. A method according to claim 13 or 14, comprising receiving the description via the satellite (3a).
